# FASCICULE DE BREVET EUROPEEN

(11) **EP 2 383 059 B1**
(45) Date de publication et mention de la délivrance du brevet: **05.06.2013**
(21) Numéro de dépôt: 10161465.9
(22) Date de dépôt: 29.04.2010
(51) Int. Cl.: B23B 31/20, B23B 31/16, B23B 31/40

(54) **Outil d'usinage et pince avec embout interchangeable**
Spanabhebendes Werkzeug und Zange mit austauschbarem Ansatzstück
Machining tool and pliers with interchangeable tip

(43) Date de publication de la demande: 02.11.2011
(73) Titulaire: Wibemo S.A., 2832 Rebeuvelier (CH)
(72) Inventeur: Bendit, Jean-Luc, 2832, Rebeuvelier (CH)
(74) Mandataire: GLN SA

(56) Documents cités:
- CN-Y- 201 217 156
- JP-U- 56 067 904
- US-A1- 2005 082 770
- US-A1- 2006 017 238

## Description

### Domaine technique

La présente invention concerne le domaine de l'usinage. Elle concerne, plus particulièrement, un outil d'usinage comprenant une broche dotée d'une douille mobile et une pince à embout interchangeable comprenant un corps définissant un axe longitudinal, comportant une première extrémité ajustée dans la broche, à l'intérieur de la douille mobile, et une deuxième extrémité, libre, dotée de doigts aptes à se déformer élastiquement, dans une direction radiale et destinés à recevoir un embout de serrage amovible.

L'invention concerne également une pince adaptée pour être utilisée dans un outil d'usinage selon l'invention.

### Etat de la technique

On connaît des outils munis de pinces de serrage à embout interchangeable agencées pour effectuer un serrage par l'extérieur. Ces outils comportent une broche et une pince comportant un corps et une axe de poussée telle que mentionnés ci-dessus. Une douille est montée mobile à l'extérieur du corps, entre ce dernier et la broche. La pince comporte un cône de serrage permettant, lorsque la douille se déplace, de diminuer le diamètre de la pince pour effectuer un serrage par l'extérieur. Ce type de pince est connu par l'homme du métier sous le nom de pince de type F.

Toutefois, ce type d'outil et de pince ne convient pas pour l'usinage de certaines pièces complexes, particulièrement lorsqu'il est nécessaire d'usiner une pièce sur toute sa longueur, sans possibilité de saisir la pièce par ses deux extrémités. Il est alors nécessaire de reprendre la pièce par l'autre côté, lorsque cela est possible, ce qui pose des problèmes de concentricité et qui peut également marquer des parties préalablement usinées de la pièce.

II existe des pinces permettant de saisir une pièce par l'intérieur de celle-ci, c'est-à-dire en insérant l'extrémité de la pince à l'intérieur d'une cavité de la pièce à usiner. Toutefois, à la connaissance de la demanderesse, soit ce genre de pince est réalisé sur mesure, dans une construction non modulable, sans possibilité de changer l'organe de préhension de la pince, soit elles nécessitent des modifications sur la broche de la machine. Par exemple, le document US2005/082770 propose un outil muni d'une douille mobile à l'intérieur du corps de l'outil, nécessitant une importante modification pour être adapté sur des machines habituellement utilisées.

La présente invention a pour but de résoudre ces inconvénients.

### Divulgation de l'invention

Pour atteindre ce but, l'invention propose un outil tel que mentionné ci-dessus, dont la pince comporte un axe de poussée monté coulissant selon ledit axe longitudinal à l'intérieur du corps, dans une première direction sous l'effet d'une force motrice transmise via la douille mobile et dans une deuxième direction sous l'effet d'un organe ressort, et en ce que ledit axe de poussée est susceptible de coulisser entre
- une première position extrême dans laquelle il n'est pas soumis à une force motrice transmise via la douille mobile, et les doigts de la deuxième extrémité définissant un diamètre extérieur d1, et
- une deuxième position extrême dans laquelle il est soumis à une force motrice transmise via la douille mobile, la force étant supérieure à la force de l'organe ressort, et dans laquelle ledit axe de poussée coopère avec la deuxième extrémité du corps pour amener les doigts à définir un diamètre extérieur d2 supérieur à d1.

L'invention concerne également une pince à embout interchangeable pour être utilisée dans un outil tel que mentionné ci-dessus.

### Brève description des dessins

D'autres détails de l'invention apparaîtront plus clairement à la lecture de la description qui suit, faite en référence au dessin annexé dans lequel :
- les figures 1 et 2 sont respectivement des vues en perspective et en coupe d'une pince selon l'invention, et
- la figure 3 est une vue en coupe d'un outil selon l'invention, dans lequel seulement la douille mobile de la broche est montrée.

### Mode(s) de réalisation de l'invention

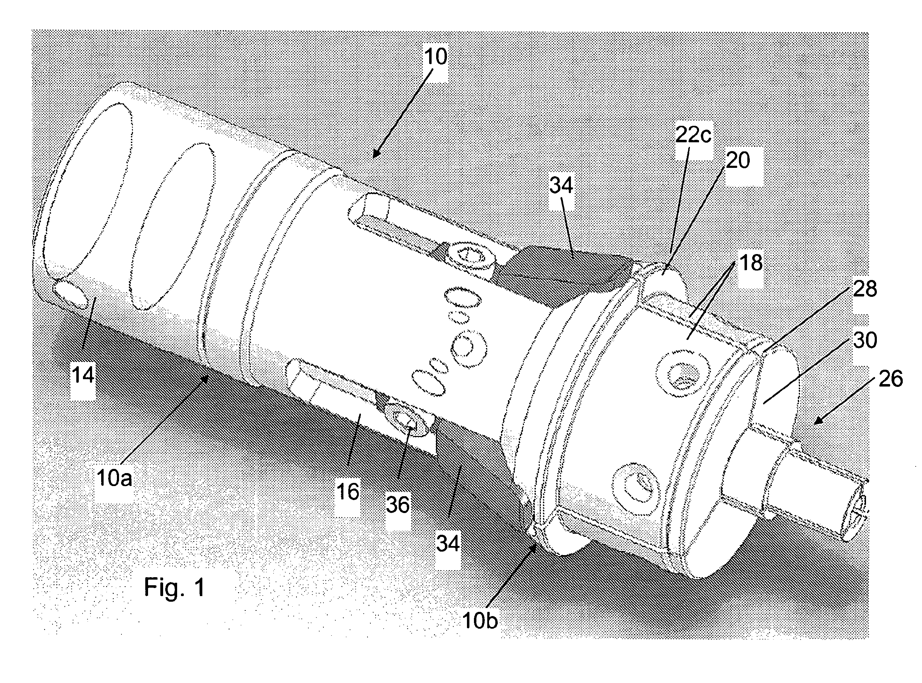

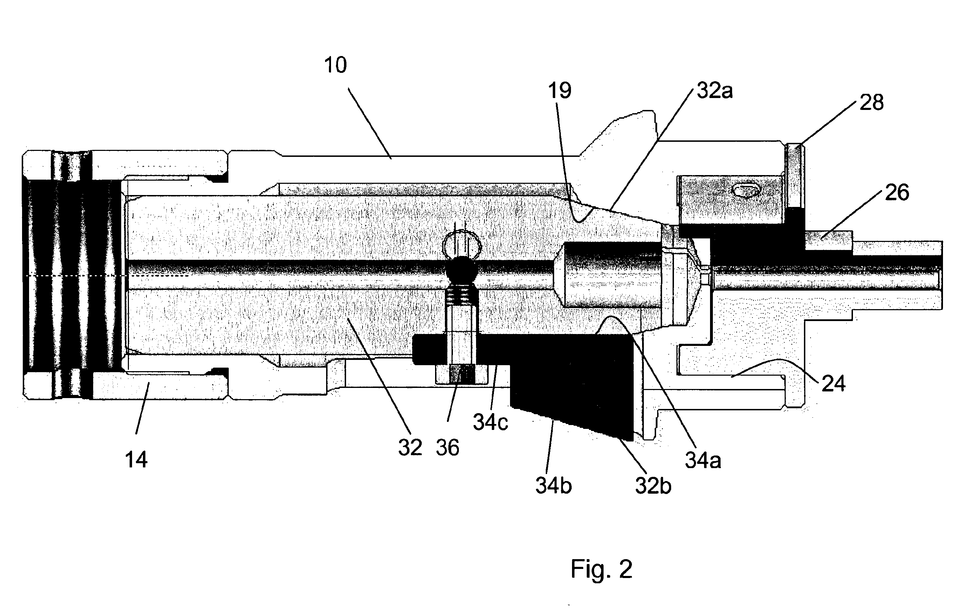

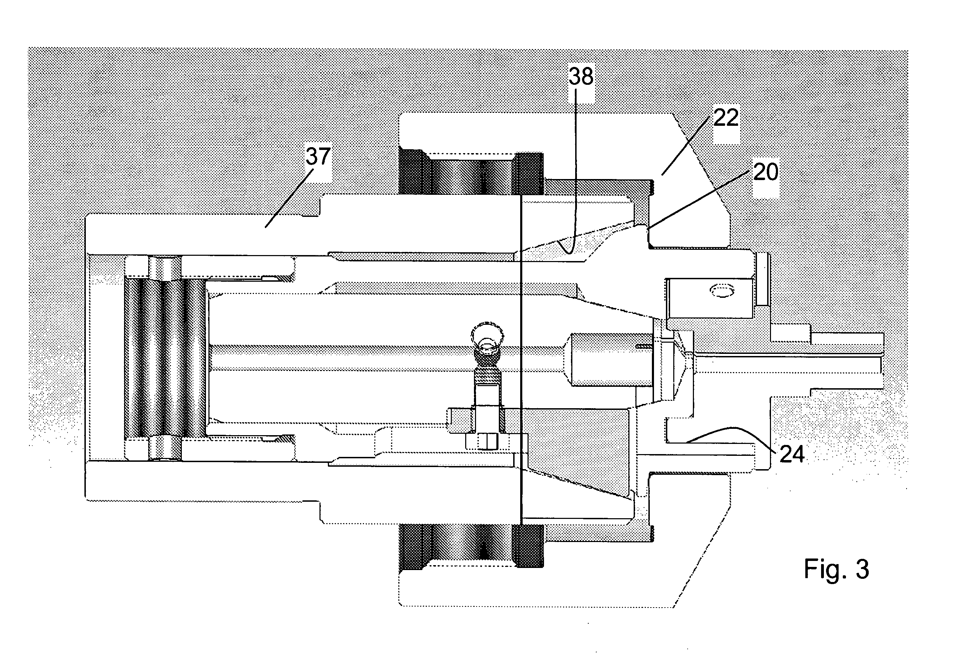

On a représenté sur les figures 1 et 2, une pince à embout interchangeable selon l'invention. Cette pince comprend un corps 10, cylindrique, définissant un axe longitudinal. A une première extrémité 10a de ce corps 10, la pince est agencée pour être ajustée dans une broche d'un outil ou d'une machine-outil, comme partiellement illustré sur la figure 3. L'homme du métier connaît la manière dont une telle pince peut être ainsi insérée dans une machine-outil, sans qu'il soit nécessaire de le décrire en détail. On relèvera toutefois que le corps 10 est rendu solidaire d'une bague de liaison 14, permettant, d'une part, la liaison de la pince à la machine-outil et, d'autre part, de guider et de positionner le corps 10.

La paroi du corps 10 est percée d'au moins une ouverture oblongue 16, orientée selon l'axe longitudinal. Dans l'exemple illustré au dessin, la paroi du corps 10 est avantageusement percée de trois ouvertures 16, régulièrement réparties autour du corps 10. Le rôle de ces ouvertures 16 apparaîtra plus loin.

Le corps 10 est également fendu du côté de sa deuxième extrémité 10b, selon l'axe longitudinal, de manière à définir des doigts 18 aptes à se déformer élastiquement, dans une direction radiale. Les fentes sont avantageusement réalisées dans le prolongement des ouvertures 16.

Le corps 10 comprend encore, sur sa paroi extérieure, un épaulement 20 offrant une surface d'appui pour un écrou 22, assurant la solidarisation de la pince sur la broche d'un outil, comme on peut le voir sur la figure 3.

A sa deuxième extrémité 10b, extrémité qui est libre lorsque la pince est insérée dans la broche d'une machine-outil, le corps 10 comprend un logement 24 destiné à recevoir un embout de serrage 26. De préférence, le logement 24 est de forme cylindrique. Il est agencé pour recevoir un embout de serrage 26 de type mandrin, dont le diamètre est ajusté pour prendre place dans le logement 24. Avantageusement, l'embout 26 comprend un rebord 28 pour prendre appui sur l'extrémité du corps 10. L'embout 26 est dimensionné de manière à prendre également appui dans le fond du logement 24.

De manière avantageuse, l'embout de serrage 26 est amovible. Il est rendu solidaire du corps 10, de préférence par vissage, au moyen d'une pluralité de vis, régulièrement réparties autour du corps 10. L'embout de serrage 26 comporte plusieurs mors 30, plus précisément, l'embout 26 comporte autant de mors 30 que la pince comporte de doigts 18 chaque mors 30 étant associé solidairement d'un doigt 18. De préférence, on a deux vis par couple doigt 18/mors 30.

Avantageusement, la tête des vis est conique et le trou pour le passage de la vis au travers du tube est légèrement décalé par rapport au taraudage ménagé dans l'embout 26, de manière à ce que les vis exercent un effet de serrage induisant une force tendant à amener l'embout de serrage 26 en direction de la première extrémité 10a du corps 10. Dans une configuration courte, les vis sont masquées, au moins partiellement, par l'écrou 22, lorsque celui-ci est en place. Une telle configuration offre une très grande rigidité de l'ensemble. On notera qu'il est possible de prévoir une pince plus longue que dans l'exemple illustré au dessin, de manière à ce que les vis solidarisant l'embout sur le corps soient accessible de l'extérieur, même lorsque l'écrou 22 est en place. L'embout peut alors être dévissé de la pince, sans retirer celle-ci de la broche.

L'embout 26 est de préférence à mors doux afin de permettre à l'utilisateur de les usiner pour adapter leurs formes à celles de la pièce à serrer ou pour réaliser une coaxialité plus précise qu'avec des mors durs.

Au niveau des doigts 18, la paroi intérieure du corps 10 présente une partie conique 19, se resserrant du côté de la deuxième extrémité. La partie conique 19 est agencée de manière à ce qu'une force de poussée exercée sur elle engendre une résultante tendant à écarter les doigts 18. Le retour des doigts à leur position de repos est assuré par les propriétés élastiques de la matière du corps.

La pince comporte également un axe de poussée 32 monté coulissant à l'intérieur du corps 10, selon l'axe longitudinal. Comme on le comprendra par la suite, l'axe de poussée 32 est agencé pour coulisser en direction de la deuxième extrémité 10b du corps 10 sous l'effet d'une force motrice extérieure, pneumatique, hydraulique, voire mécanique, selon l'outil sur lequel la pince est destinée à être montée.

L'axe de poussée 32 se termine par des portions coniques 32a dont l'angle est sensiblement égal à celui de la partie conique 19. Les portions coniques 32a sont agencées pour coopérer avec la partie conique 19 du corps de manière à pouvoir écarter les doigts, comme expliqué ci-dessus.

L'axe de poussée 32 est également mobile en direction de la première extrémité 10a du corps 10, sous l'effet d'un organe ressort non représenté, disposé à l'intérieur de la pince. L'axe de poussée 32 peut coulisser entre deux positions extrêmes définies par des butées, que l'homme du métier pourra réaliser selon ses connaissances. L'organe ressort est adapté en fonction de l'outil sur lequel la pince doit être monté, de manière à ce que sa force soit inférieure à la force motrice extérieure que peut exercer l'outil. Ainsi, l'axe de poussée 32 est susceptible de coulisser entre :
- une première position extrême lorsqu'il n'est pas soumis à une force motrice extérieure, et
- une deuxième position extrême lorsqu'il est soumis à une force motrice extérieure.

Afin de recevoir la force motrice extérieure, l'axe de poussée 32 est solidaire d'au moins un élément conique 34 disposé au moins en partie à l'extérieur du corps 10. Dans un mode de réalisation préféré, on a trois éléments coniques 34 comprenant chacun un côté droit 34a au contact de l'axe de poussée 32. Pour une meilleure coopération, l'axe de poussée 32 peut présenter des portions planes 32b pour recevoir le côté droit 34a des éléments coniques, les portions planes 32b alternant avec les portions coniques 32a. Ces portions planes 32a peuvent être en cavité pour offrir des appuis latéraux aux éléments coniques. Ces derniers présentent un côté conique 34b, interrompu pour former une languette de fixation 34c pour leur assemblage sur l'axe de poussée 32.

Comme on peut le voir sur la figure 3, cette disposition à l'extérieur du corps 10 offre la possibilité à cet élément conique 34 de coopérer avec la broche. De préférence, on a trois éléments coniques 34, chacun étant vissé sur l'axe de poussée 32 par des vis 36 disposées au travers des ouvertures 16 ménagées dans la paroi du corps 10 et coopérant avec la languette de fixation 34c.

La broche comporte une douille mobile 37 qui est seule représentée, capable d'avancer en direction de la deuxième extrémité de la pince sous l'action d'une force motrice hydraulique, pneumatique ou mécanique transmise par la machine-outil. Cette douille 37 comporte au niveau de sa paroi intérieure, au moins une zone de contact 38 destinée à coopérer avec chaque élément conique 34 de la pince. Cette zone de contact 38 peut être droite ou, avantageusement, également conique, de manière à ce que le contact entre la zone 38 et l'élément 34 sous l'action de la force motrice, induise une résultante tendant à déplacer l'axe de poussée dans sa deuxième position extrême, via chacun des éléments coniques.

Les deux positions extrêmes de l'axe de poussée sont définies de manière à ce que:
- lorsque l'axe de poussée 32 est dans sa première position extrême, il ne coopère pas avec la partie conique 19 de la paroi intérieure du corps 10, les doigts 18 de la deuxième extrémité 10b définissant un premier diamètre extérieur d1, résultant de leurs propriétés élastiques,
- lorsque l'axe de poussée 32 est dans sa deuxième position extrême, il coopère avec la partie conique 19 de la paroi intérieure du corps 10, exerçant une pression contraignant les doigts 18 de la deuxième extrémité 10b de manière à ce que ceux-ci définissent un deuxième diamètre extérieur d2 supérieur à d1.

Naturellement, l'embout 26 est agencé de manière à ne pas gêner les mouvements de l'axe de poussée 32. Les butées peuvent être déterminées par la coopération entre les éléments coniques 34 et le corps 10, de part et d'autre des ouvertures 16.

Ainsi, grâce à la liaison entre les doigts 18 et les mors 30 de l'embout de serrage 26, on peut donc, lorsque l'axe de poussée 32 est dans sa première position extrême, insérer l'embout de serrage 26 à l'intérieur d'une cavité que comporte une pièce à serrer, l'embout 26 ayant été dimensionné de manière adaptée à la cavité. Puis, en amenant l'axe de poussée 32 dans sa deuxième position extrême, sous l'effet du déplacement de la douille 37 mue par une force motrice extérieure, l'embout de serrage 26 effectue un serrage de la pièce par l'intérieur de la cavité. Lorsque la douille 37 est ramenée contre la machine sous l'effet d'une contre-pression, l'axe de poussée 32 revient dans sa première position extrême sous l'action du ressort logé dans la pince. Les doigts reprennent élastiquement leur position de repos, correspondant à un diamètre inférieur aux dimensions de la cavité. On peut donc enlever la pièce de l'embout de serrage 26.

La pince selon l'invention permet donc de très simplement changer l'embout de serrage pour effectuer des tâches diverses. En outre, elle s'adapte sur une machine standard, sans devoir modifier ou adapter broche. Il est même possible de changer l'embout sans devoir enlever la pince de l'outil. Le gain de temps, notamment en réglage et en calibrage de l'outil est donc considérable. Une telle pince offre donc une grande précision et une très bonne rigidité dans la prise de la pièce, tout en permettant d'usiner la pièce sur toute sa longueur, sans devoir changer de machine ou modifier la prise de la pièce.

## Revendications

1. Outil d'usinage comprenant une broche dotée d'une douille mobile (37) capable d'avancer selon une direction axiale et une pince à embout , ladite pince interchangeable comprenant un corps (10) définissant un axe longitudinal, comportant une première extrémité (10a) ajustée dans la broche , à l'intérieur de la douille mobile (37) et une deuxième extrémité (10b), libre, dotée de doigts (18) aptes à se déformer élastiquement, dans une direction radiale,
**caractérisé en ce que** les doigts (18) sont destinés à recevoir un embout de serrage (26) amovible et
**en ce que** la pince comprend aussi un organe ressort et un axe de poussée (32) monté coulissant selon ledit axe longitudinal à l'intérieur dudit corps (10), dans une première direction sous l'effet d'une force motrice transmise via la douille mobile (37) et dans une deuxième direction sous l'effet dudit organe ressort, et
**en ce que** ledit axe de poussée (32) est susceptible de coulisser entre
- une première position extrême lorsque ledit axe de poussée (32) n'est pas soumis à une force motrice transmise via la douille mobile (37), et dans laquelle les doigts (18) de ladite deuxième extrémité (10b) définissent un diamètre extérieur d1, et
- une deuxième position extrême lorsque ledit axe de poussée (32) est soumis à une force motrice transmise via la douille mobile (37), ladite force étant supérieure à la force de l'organe ressort, et dans laquelle ledit axe de poussée (32) coopère avec la deuxième extrémité (10b) du corps pour amener les doigts (18) à définir un diamètre extérieur d2 supérieur à d1.

2. Outil selon la revendication 1, **caractérisé en ce que** l'axe de poussée est solidaire d'au moins un élément conique (34) disposé au moins en partie à l'extérieur du corps (10) de manière à pouvoir coopérer avec la douille mobile (37).

3. Outil selon la revendication 2, **caractérisé en ce que** la paroi intérieure de la douille mobile (37) comporte une zone de contact (38) agencée pour coopérer avec ledit élément conique (34) de l'axe de poussée (32).

4. Outil selon la revendication 3, **caractérisé en ce que** la zone de contact (38) est conique, mais d'angle inférieur à l'angle du cône desdits éléments coniques (34).

5. Outil selon l'une des revendications précédentes, **caractérisé en ce que** la pince comporte un épaulement (20) agencé pour coopérer avec un écrou (22) destiné à coopérer avec la broche.

6. Pince interchangeable à embout pour être utilisée dans une broche (12) dotée d'une douille mobile (37) capable d'avancer en direction axiale, ladite pince comprenant un corps (10) définissant un axe longitudinal, ledit corps (10) comportant une première extrémité (10a) destinée à être ajustée dans ladite douille mobile (37) et une deuxième extrémité (10b), libre, dotée de doigts (18) aptes à se déformer élastiquement, dans une direction radiale ,
**caractérisée en ce que** les doigts (18) sont destinés à recevoir un embout de serrage (26) amovible ; et **en ce que** la pince comprend un organe ressort et un axe de poussée (32) monté coulissant selon ledit axe longitudinal à l'intérieur dudit corps (10), dans une première direction sous l'effet d'une force motrice transmise via la douille mobile (37) et dans une deuxième direction sous l'effet de l'organe ressort, et **en ce que** l'axe de poussée (32) est solidaire d'au moins un élément conique (34) disposé au moins en partie à l'extérieur du corps (10), et **en ce que** ledit axe de poussée (32) est susceptible de coulisser entre
- une première position extrême lorsque ledit axe de poussée (32) n'est pas soumis à une force motrice transmise via la douille mobile (37), et les doigts (18) de ladite deuxième extrémité (10b) définissant un diamètre extérieur d1, et
- une deuxième position extrême lorsque ledit axe de poussée (32) est soumis à une force motrice, ladite force étant supérieure à la force de l'organe ressort, et dans laquelle ledit axe de poussée coopère avec la deuxième extrémité (10b) du corps pour amener les doigts (18) à définir un diamètre extérieur d2 supérieur à d1.

7. Pince selon la revendication 6, **caractérisée en ce que** la paroi intérieure du corps présente au niveau des doigts (18), une partie conique (19) se resserrant du côté de la deuxième extrémité et agencée de manière à ce qu'une force de poussée exercée sur elle engendre une résultante tendant à écarter les doigts (18),
et **en ce que** l'axe de poussée (32) se termine par des portions coniques (32a) dont l'angle est sensiblement égal à celui de la partie conique (19), agencées pour coopérer avec la partie conique (19) du corps de manière à écarter les doigts.

8. Pince selon l'une des revendications 6 et 7, **caractérisée en ce qu'**elle comporte plusieurs éléments coniques (34) répartis angulairement autour de la pince.

9. Pince selon l'une des revendications 6 et 7, **caractérisée en ce que** ledit corps (10) comprend des ouvertures oblongues (16) au travers desquelles les éléments coniques (34) sont fixés à l'axe de poussée (32).

10. Pince selon l'une des revendications 6 à 9, **caractérisée en ce qu'**elle est agencée pour recevoir un embout de serrage (26) de type mandrin, dont le diamètre est ajusté pour prendre place dans le logement (24).

11. Pince selon la revendication 10, **caractérisée en ce que** la deuxième extrémité du corps définit n doigts (18) déformables radialement, et **en ce que** chaque doigt est agencé pour être rendu solidaire par vissage d'un mors (30) d'un embout de serrage (26).

## Patentansprüche

1. Spanabhebendes Werkzeug, das eine Spindel umfasst, die mit einer beweglichen Hülse (37) ausgestattet ist, die imstande ist, sich gemäß einer axialen Richtung vorzubewegen, und eine Zange mit Spitze, wobei die austauschbare Zange einen Körper (10) umfasst, der eine Längsachse definiert, der ein erstes, in die Spindel in die bewegliche Hülse (37) eingepasstes Ende (10a) und ein zweites freies Ende (10b), das mit Fingern (18) ausgestattet ist, die imstande sind, sich in eine radiale Richtung elastisch zu verformen, aufweist,
**dadurch gekennzeichnet, dass** die Finger (18) dazu bestimmt sind, eine lösbare Spannspitze (26) aufzunehmen und
dadurch, dass die Zange ebenfalls ein Federorgan und eine Schubachse (32) umfasst, die gemäß der Längsachse in dem Körper (10) in eine erste Richtung unter Einwirkung einer bewegenden Kraft, die über die bewegliche Hülse (37) übertragen wird, und in eine zweite Richtung unter Einwirkung des Federorgans gleitend montiert ist, und
dadurch, dass die Schubachse (32) imstande ist zu gleiten zwischen
- einer ersten extremen Position, wenn die Schubachse (32) keiner bewegenden Kraft ausgesetzt ist, die über die bewegliche Hülse (37) übertragen wird, und in der die Finger (18) des zweiten Endes (10b) einen Außendurchmesser d1 definieren, und
- einer zweiten extremen Position, wenn die Schubachse (32) einer bewegenden Kraft ausgesetzt ist, die über die bewegliche Hülse (37) übertragen wird, wobei die Kraft größer ist als die Kraft des Federorgans, und in der die Schubachse (32) mit dem zweiten Ende (10b) des Körpers zusammenarbeitet, um die Finger (18) dazu zu bewegen, einen Außendurchmesser d2 zu definieren, der größer als d1 ist.

2. Werkzeug nach Anspruch 1, **dadurch gekennzeichnet, dass** die Schubachse mit mindestens einem konischen Element (34) verbunden ist, das mindestens teilweise derart außerhalb des Körpers (10) angeordnet ist, dass es mit der beweglichen Hülse (37) zusammenarbeiten kann.

3. Werkzeug nach Anspruch 2, **dadurch gekennzeichnet, dass** die Innenwand der beweglichen Hülse (37) eine Kontaktzone (38) aufweist, die ausgebildet ist, um mit dem konischen Element (34) der Schubachse (32) zusammenzuarbeiten.

4. Werkzeug nach Anspruch 3, **dadurch gekennzeichnet, dass** die Kontaktzone (38) konisch ist, aber mit einem kleineren Winkel als der Winkel des Konus der konischen Elemente (34).

5. Werkzeug nach einem der vorangehenden Ansprüche, **dadurch gekennzeichnet, dass** die Zange einen Absatz (20) aufweist, der ausgebildet ist, um mit einer Mutter (22) zusammenzuarbeiten, die dazu bestimmt ist, mit der Spindel zusammenzuarbeiten.

6. Austauschbare Zange mit Spitze für eine Verwendung in einer Spindel (12), die mit einer beweglichen Hülse (37) ausgestattet ist, die imstande ist, sich in axialer Richtung vorzubewegen, wobei die Zange einen Körper (10) umfasst, der eine Längsachse definiert, wobei der Körper ein erstes, in die Spindel in die bewegliche Hülse (37) eingepasstes Ende (10a) und ein zweites freies Ende (10b), das mit Fingern (18) ausgestattet ist, die imstande sind, sich in eine radiale Richtung elastisch zu verformen, aufweist,
**dadurch gekennzeichnet, dass** die Finger (18) dazu bestimmt sind, eine lösbare Spannspitze (26) aufzunehmen und dadurch, dass die Zange ein Federorgan und eine Schubachse (32) umfasst, die gemäß der Längsachse in dem Körper (10) in eine erste Richtung unter Einwirkung einer bewegenden Kraft, die über die bewegliche Hülse (37) übertragen wird, und in eine zweite Richtung unter Einwirkung des Federorgans gleitend montiert ist, und dadurch, dass die Schubachse (32) mit mindestens einem konischen Element (34) verbunden ist, das mindestens teilweise außerhalb des Körpers (10) angeordnet ist, und dadurch, dass die Schubachse (32) imstande ist, zu gleiten zwischen
- einer ersten extremen Position, wenn die Schubachse (32) keiner bewegenden Kraft ausgesetzt ist, die über die bewegliche Hülse (37) übertragen wird, und die Finger (18) des zweiten Endes (10b) einen Außendurchmesser d1 definieren, und
- einer zweiten extremen Position, wenn die Schubachse (32) einer bewegenden Kraft ausgesetzt ist, wobei die Kraft größer ist als die Kraft des Federorgans, und in der die Schubachse (32) mit dem zweiten Ende (10b) des Körpers zusammenarbeitet, um die Finger (18) dazu zu bewegen, einen Außendurchmesser d2 zu definieren, der größer als d1 ist.

7. Zange nach Anspruch 6, **dadurch gekennzeichnet, dass** die Innenwand des Körpers auf Ebene der Finger (18) einen konischen Abschnitt (19) aufweist, der sich auf der Seite des zweiten Endes spannt und derart ausgebildet ist, dass eine Schubkraft, die auf es einwirkt, eine Resultierende erzeugt, die derart wirkt, dass die Finger (18) abgespreizt werden,
und dadurch, dass die Schubachse (32) in konischen Abschnitten (32a) endet, deren Winkel etwa dem Winkel des konischen Abschnitts (19) entspricht, die ausgebildet sind, um mit dem konischen Abschnitt (19) des Körpers derart zusammenzuarbeiten, dass die Finger abgespreizt werden.

8. Zange nach einem der Ansprüche 6 und 7, **dadurch gekennzeichnet, dass** sie mehrere konische Elemente (34) aufweist, die winklig um die Zange verteilt sind.

9. Zange nach einem der Ansprüche 6 und 7, **dadurch gekennzeichnet, dass** der Körper (10) längliche Öffnungen (16) umfasst, durch die die konischen Elemente (34) an der Schubachse (32) befestigt sind.

10. Zange nach einem der Ansprüche 6 bis 9, **dadurch gekennzeichnet, dass** sie ausgebildet ist, um eine Spannspitze (26) vom Typ Dorn aufzunehmen, dessen Durchmesser angepasst ist, um sich in der Aufnahme (24) zu platzieren.

11. Zange nach Anspruch 10, **dadurch gekennzeichnet, dass** das zweite Ende des Körpers n Finger (18) definiert, die radial verformbar sind, und dadurch, dass jeder Finger ausgebildet ist, um durch Schrauben einer Backe (30) mit einer Spannspitze (26) verbunden zu sein.

## Claims

1. Machining tool comprising a pin equipped with a moving bush (37) capable of advancing in an axial direction and pliers with a tip, said interchangeable pliers comprising a body (10) defining a longitudinal axis, including a first end (10a) adjusted in the pin, inside the movable bush (37), and a second end (10b), free, equipped with fingers (18) capable of elastically deforming, in a radial direction, **characterized in that** the fingers (18) are designed to receive a removable gripping tip (26) and
**in that** the pliers also comprises a spring member and a push pin (32) slidingly mounted in said longitudinal axis inside said body (10), in a first direction under the effect of a driving force transmitted via the movable bush (37) and in a second direction under the effect of said spring member, and
**in that** said push pin (32) is capable of sliding between
- a first extreme position when said push pin (32) is not subject to a driving force transmitted by the moving bush (37), and in which the fingers (18) of said second end (10b) define an outer diameter d1, and
- a second extreme position when said push pin (32) is subjected to a driving force transmitted by the moving bush (37), said force being greater than the force of the spring member, and in which said push pin (32) cooperates with the second end (10b) of the body make the fingers (18) define an outer diameter d2 larger than d1.

2. Tool according to claim 1, **characterized in that** the push pin is secured to at least one conical element (34) positioned at least partially outside the body (10) so as to be able to cooperate with the moving bush (37).

3. Tool according to claim 2, **characterized in that** the inner wall of the moving bush (37) includes a contact area (38) arranged to cooperate with said conical element (34) of the push pin (32).

4. Tool according to claim 3, **characterized in that** the contact area (38) is conical, but with a smaller angle than the angle of the cone of said conical elements (34).

5. Tooll according to one of the preceding claims, **characterized in that** the pliers include a shoulder (20) arranged to cooperate with a notch (22) designed to cooperate with the pin.

6. Pliers with an interchangeable tip to be used in a pin (12) equipped with a moving bush (37) capable of advancing in an axial direction, said pliers comprising a body (10) defining a longitudinal axis, said body (10) including a first end (10a) designed to be adjusted in said moving bush (37) and a second free end (10b) equipped with fingers (18) capable of deforming elastically, in a radial direction, **characterized in that** the fingers (18) are designed to receive a removable gripping tip (26); and **in that** the pliers comprise a spring member and a push pin (32) slidingly mounted along said longitudinal axis inside said body (10), in a first direction under the effect of a driving force transmitted by means of the moving bush (37) and in a second direction under the effect of the spring member, and **in that** the push pin (32) is secured to at least one conical element (34) positioned at least partially outside the body (10), and **in that** said push pin (32) is capable of sliding between
- a first extreme position when said push pin (32) is not subject to a driving force transmitted by the moving bush (37), and in which the fingers (18) of said second end (10b) define an outer diameter d1, and
- a second extreme position when said push pin (32) is subjected to a driving force, said force being greater than the force of the spring member, and in which said push pin cooperates with the second end (10b) of the body to make the fingers (18) define an outer diameter d2 larger than d1.

7. Pliers according to claim 6, **characterized in that** the inner wall of the body has, at the fingers (18), a conical part (19) that is tighter on the side of the second end and arranged such that a thrust force exerted thereon creates a resultant tending to separate the fingers (18),
and **in that** the push pin (32) ends with conical portions (32a) whereof the angle is substantially equal to that of the conical part (19), arranged to cooperate with the conical part (19) of the body so as to separate the fingers.

8. Pliers according to one of claims 6 and 7, **characterized in that** it includes several conical elements (34) distributed angularly around the pliers.

9. Pliers according to one of claims 6 and 7, **characterized in that** said body (10) comprises oblong openings (16) through which the conical elements (34) are fixed to the push pin (32).

10. Pliers according to one of claims 6 to 9, **characterized in that** it is arranged to receive a gripping tip (26) of the mandrel type, whereof the diameter is adjusted to be placed in the housing (24).

11. Pliers according to claim 10, **characterized in that** the second end of the body defines n radially deformable fingers (18), and **in that** each finger is arranged to be secured by screwing to a jaw (30) of a gripping tip (26).
